# EUROPÄISCHE PATENTSCHRIFT

(11) **EP 0 593 482 B1**
(45) Veröffentlichungstag und Bekanntmachung des Hinweises auf die Patenterteilung: **07.02.1996**
(21) Anmeldenummer: 91917713.9
(22) Anmeldetag: 10.10.1991
(51) Int. Cl.: C08J 11/06, B32B 27/00, B29B 17/00

(54) **VERFAHREN ZUR HERSTELLUNG VON KUNSTSTOFFVERBUNDPLATTEN**
METHOD OF MANUFACTURING PLASTIC COMPOSITE PANELS
PROCEDE POUR LA FABRICATION DE PANNEAUX COMPOSITE EN PLASTIQUE

(43) Veröffentlichungstag der Anmeldung: 27.04.1994
(73) Patentinhaber: WAHL, Bernd, D-74193 Schwaigern (DE)
(72) Erfinder: WAHL, Bernd, D-74193 Schwaigern (DE)
(74) Vertreter: Schuster, Gregor, Dipl.-Ing.
(86) Internationale Anmeldenummer: DE9100801
(87) Internationale Veröffentlichungsnummer: WO9307205

(56) Entgegenhaltungen:
- EP-A- 0 161 035
- EP-A- 0 169 824
- DD-A- 119 840
- DE-A- 2 439 671
- KUNSTSTOFFBERATER. Bd. 20, Nr. 8, 1974, ISERNHAGEN DE Seiten 396 - 400; VON OB: 'KLEBEN VON KUNSTSTOFFEN MIT KUNSTSTOFFEN - EINE PROBLEMLOSE ANGELEGENHEIT ?'
- W.J. WARD ET AL. :"SURFACE MODIFICATION", 1989, JOHN WILEY & SONS , NEW YORK (= ENCYCLOPEDIA OF POLYMER SCIENCE AND ENGINEERING, SUPPLEMENT VOLUME)

## Beschreibung

### Stand der Technik

Die Erfindung geht aus von einem Verfahren zur Herstellung von Kunststoffverbundplatten sowie einer nach diesem Verfahren hergestellten Kunststoffverbundplatte nach der Gattung des Anspruchs 1 bzw. Anspruchs 9.

Bei der Herstellung von Kunststoffverbundplatten werden üblicherweise auf Kunststoffplatten eines als Trägerplatte dienenden Kunststoffes meist über einen Zweikomponentenkleber andere Materialien, beispielsweise Kunststoff, aber auch irgendwelche Dekormaterialien, aufgeklebt, wofür vorzugsweise ein Zweikomponentenkleber verwendet wird. So ist es beispielsweise bekannt (DE-GM 74 40 735) Textilabfälle unter Verwendung von Bindemitteln zu einer Platte zu pressen, um diese dann an den Außenflächen mit einer Schicht zu überdecken, die z.B. aus Papier, Kunststoff, Holz oder Asbest bestehen kann. Hierdurch wird dem Problem aus dem Weg gegangen, daß thermoplastische Kunststoffe als Recyclingplatten äußerst unbestimmt in der Zusammensetzung sind und dadurch nur sehr schwer zu verkleiden sind. Wie dem Artikel "Kleben von Kunststoffen mit Kunststoffen eine problemlose Angelegenheit?" (Kunststoffberater 8/1975, Seite 396) zu entnehmen ist, ist das Verkleben von Kunststoffen äußerst problematisch. Hinzu kommt das Problem, daß Kunststoffe unterschiedliche Wärmeausdehnungskoeffizienten haben, was zu einer erheblichen Belastung der Klebstelle führt. Um trotzdem Recyclingkunststoffe auf größerer Basisi nutzen zu können, ist es bekannt, über eine Bindemittelmatrix aus Kunststoff und einem Zuschlagstoff aus mindestens einem Recyclingkunststoffgranulat und/oder Recyclingkunststoffschrot und/oder Recyclingkunststoff-Flockengranulat einen Werkstoff auf der Basis eines Recyclingkunststoffs zu schaffen (DE-OS 36 20 321). Hierdurch wird die Problematik der Klebeverbindung umgangen bei Nutzung der positiven Seiten des Kunststoffs als Baumaterial. Es ist jedoch weder das Problem der unterschiedlichen Ausdehnungskoeffizienten, die zu einem Verbiegen solcher Werkstoffe bei Temperaturänderungen führen, unterbunden, noch ist das Problem gelöst, Verkleidungen mit beispielsweise unterschiedlichen Dekoren an diesen Kunststoffelementen anzubringen.

Dieses Sichverbiegen bei Temperatur ist auch durch eine andere Kunststoffverbundplatte bekannt, bei der ein homogener Primärthermoplast mit einer Oberfläche aus einem Duroplast versehen wird, welche letztere der Dekoration dient. Bei diesen bekannten Kunststoffverbundplatten ist das Verbinden zwischen Trägerplatte und Dekorplatte deshalb problemlos, weil es sich um homogene Primärkunststoffe handelt, die problemlos entweder über einen Zweikomponentenkleber oder durch Aufwärmen bis zur Schmelztemperatur des Thermoplastes miteinander verbindbar sind.

### Zugrundliegende Aufgabe

Der Erfindung liegt die Aufgabe zugrunde, ein Verfahren zur Herstellung von Kunststoffverbundplatten bzw. eine Kunststoffverbundplatte zu schaffen, bei der das verwendete Kunststoffmaterial wieder eingeschmolzenes Sekundärmaterial ist, so daß eine massive Kunststoffplatte entsteht, also nicht irgendeine Platte aus zusammegepreßten Kunststoff-Fasern bzw. -Schnipseln. Bekanntlich handelt es sich bei diesen Recyclingkunststoffen um nichthomogene Mischungen, die vor allem auch Polyethylene enthalten und dadurch nach den Erfahrungen des Fachmannes nicht auf die Dauer haltbar mit Dekorplatten beschichtbar sind, insbesondere auch deshalb, weil die bekannten Kleber laut Hersteller jeweils nur für ganz bestimmte homogene Kunststoffe verwendbar sind (siehe obengenannte Artikel). Hinzu kommt, daß die Oberflächenbeschaffenheit der Recyclingkunststoffe je nach nicht vorherbestimmbarer Mischung entsprechend unterschiedlich ist.

Aus diesem Grunde wurden Platten aus massivem Sekundärkunststoff bisher nicht beschichtet, sondern der Sekundärkunststoff wurde für weitgehend aus einem Stück gespritzte Kunststoffmöbel für den Garten oder als Gehwegsteine verwendet.

### Vorteile der Erfindung

Das erfindungsgemäße Verfahren zur Herstellung der Kunststoffverbundplatten bzw. die erfindungsgemäße Kunststoffverbundplatte mit den kennzeichnenden Merkmalen des Anspruchs 1 bzw. des Anspruchs 9 hat gegenüber den gattungsgemäßen eingangs genannten Kunststoffverbundplatten den Vorteil eines Produktes, das nicht nur dem dringenden Umweltbedarf an zu verarbeitenden Sekundärkunststoffen Rechnung trägt, sondern vor allem in Qualität und Verwendungsmöglichkeit jener der Primärkunststoffe entspricht. Besonders die Verbindung zwischen Kunststoffplatte und Verkleidung, d.h. Trägerplatte und Dekorplatte, ist nunmehr so gelöst, daß die Qualität vergleichbar ist mit einer Verbindung zwischen Primärwerkstoffen, allerdings mit dem Vorteil, daß Recyclingkunststoffe wesentlich preiswerter sind als Primärwerkstoffe. Die erfindungsgemäße Kunststoffplatte ist in den gleichen Bereichen einsetzbar wie Verbundplatten aus Primärwerkstoff.

Mit dem in Anspruch 1 verwendeten Verfahren wurde vor allem die Voreingenommenheit der Fachwelt überwunden, Kunststoffplatten, die Polyethylene enthalten, mit homogenen Dekorplatten zu verbinden. Hinzu kommt bei der Erfindung die Verwendung von Recyclematerial, durch welche die Homogenität bestimmter Materialien zusätzlich herabgesetzt wird.

Maßgebend für die gute Verbindung zwischen Kunststoffplatte und Verkleidung ist die Oberflächenbehandlung der Kunststoffplatte, welche auf unterschiedliche Weise erfolgen kann. So kann die Oberflächenbehandlung schon dadurch geschehen, daß beim Herstellen der als Trägerplatte dienenden Kunststoffplatte durch strukturierte Mantelflächen der in der Reihenfolge der Walzen zuletzt wirkenden Walzen eine entsprechende strukturierte Oberfläche in der Kunststoffplatte zu erzielen. Diese Struktur kann unterschiedlichster Art sein. Es können Noppen oder Ausnehmungen sein, in jedem Fall wird hier bei dieser Ausgestaltung die Verformbarkeit der Oberfläche der Kunststoffplatte aufgrund der noch vorhandenen Temperatur der Walze bzw. des Thermoplastes genutzt. Während bei den ersten Walzen der Kalandrieranlage der Kunststoff noch eine Tempteratur von ca. 190° C aufweist, hat sie vor dem letzten, beispielsweise vierten, Walzenpaar noch eine Temperatur von 90 bis 95° C, so daß eine plastische Verformung der Oberfläche gut möglich ist.

Nach einer anderen vorteilhaften Ausgestaltung der Erfindung erfolgt die Oberflächenbehandlung mechanisch, nämlich materialabhebend durch Schleifen bzw. Hobeln der Oberfläche, womit einerseits eine gewünschte Aufrauhung der Oberfläche erzielt wird, aber andererseits auch eine zusätzliche Planierung, da manchmal beim Abkühlen der Platten aufgrund der Inhomogenität des Kunststoffmaterials Unebenheiten entstehen.

-Eine wesentliche Verbesserung der Verbindung mit dem Kleber, inbesondere Zweikomponentenkleber, wird dadurch erreicht, daß die Oberfläche der Kunststoffplatte erfindungsgemäß oxidiert wird, was durch elektronische, chemische oder physikalische Mittel erfolgen kann. Durch diese Oxidation wird die Haftfähigkeit des Kunststoffes wesentlich erhöht. Die Oxidation der Oberfläche der Kunststoffplatte kann erfindungsgemäß mit bekannten Einrichtungen erfolgen, wie beispielsweise einer Korona-Anlage oder über Abflammen mit offener Flamme von Propangas bzw. Butangas.

Nach einer anderen, die Oberflächenbehandlung betreffenden Ausgestaltung der Erfindung wird in die noch warme Oberfläche der Kunststoffplatte ein Glasvlies eingewalzt. Dieses Glasvlies geht ohne weiteres eine homogene Verbindung mit dem Recyclekunststoff ein und dient seinerseits wieder zur Verbesserung der Haftung von Klebern, so daß man möglicherweise statt mit einem Zweikomponentenkleber mit einem Einkomponentenkleber auskommt, was das Herstellungsverfahren wesentlich verbilligt.

Nach einer weiteren vorteilhaften Ausgestaltung der Erfindung kann das Aufpressen der Verkleidung auf die Kunststoffplatte erfolgen, solange die Kunststoffplatte noch warm ist, so daß ein Schmelzkleber verwendbar ist, der beispielsweise in Form einer Folie oder als Schicht auf der Verkleidung eingebracht wird. Bei dieser Art das Aufpressen betreffenden Ausgestaltung der Erfindung kann vor allem im On-line-Verfahren gearbeitet werden, d.h., daß die die Kalandriereinrichtung verlassenden warmen Platten unmittelbar mit der Verkleidung im Walzen- oder Flächenpressverfahren miteinander verbunden werden.

Obwohl Kunststoffplatten aus Recyclingmaterial seit langem bekannt sind und andererseits Kunststoffverbundplatten lediglich bekannt sind aus Kunststoffplatten aus Primärkunststoff, besteht,die erfindungsgemäße Kunststoffverbundplatte aus einer Trägerplatte aus Sekundärkunststoff und deren Oberflächenverkleidung aus Primärkunststoff. Bei einer bevorzugten erfindungsgemäßen Kunststoffverbundplatte sind beide Seiten der Trägerplatte verkleidet und zwar mit Pimärkunststoffmaterialien etwa gleichen Ausdehnungskoeffizienten. Hierdurch wird vermieden, daß sich die Platten bei Temperaturänderungen verbiegen. Nach einer weiteren vorteilhaften Ausgestaltung der Erfindung kann als Verkleidung auch Kunststoffschaum dienen und es ist auch denkbar, daß zwei Recyclekunststoffplatten über eine derartige Kunststoffschaumverkleidung miteinander verbunden sind.

## Patentansprüche

1. Verfahren zur Herstellung von Kunststoffverbundplatten aus einer Kunststoffplatte und einer Verkleidung von deren Oberfläche, gekennzeichnet durch folgende Verfahrensschritte:
- Herstellen einer massiven Kunststoffplatte als Trägerplatte im Warmkalandrierverfahren, wobei der Kunststoff im wesentlichen Sekundärkunststoff (Recyclingkunststoff) ist
- Oberflächenbehandlung der Kunststoffplatte zur Verbesserung der Verbundwirkung bzw. Haftung eines Klebers
- automatisches bzw. manuelles Auftragen eines Klebers auf die oberfläche der Kunststoffplatte bzw. der Verkleidung
- Auflegen der Verkleidung in Form eines Laminats einer Folie oder Platte aus Kunststoff, Metall, Textilgewebe und dgl. auf die Oberfläche der Kunststoffplatte und
- Aufpressen der Verkleidung auf die Kunststoffplatte.

2. Verfahren nach Anspruch 1, dadurch gekennzeichnet, daß als Oberflächenbehandlung mindestens die in der Plattenherstellung zuletzt wirkenden Walzen bei der Herstellung der Kunststoffplatte eine strukturierte Mantelfläche aufweisen, um eine strukturierte Oberfläche der Kunststoffplatte zu bewirken.

3. Verfahren nach Anspruch 1, dadurch gekennzeichnet, daß die Oberflächenbehandlung mechanisch, materialabhebend (Schleifen der Oberfläche) erfolgt, wodurch die Oberfläche der Kunststoffplatte planiert sowie aufgerauht wird.

4. Verfahren nach Anspruch 1 oder 3, dadurch gekennzeichnet, daß die Oberfläche der Kunststoffplatte oxidiert wird durch elektronische, chemische oder physikalische Behandlung.

5. Verfahren nach Anspruch 1, dadurch gekennzeichnet, daß als Oberflächenbehandlung in die noch warme Oberfläche der Kunststoffplatte ein Glasvlies eingewalzt wird.

6. Verfahren nach Anspruch 4, dadurch gekennzeichnet, daß die Oxidation in einer Koronaanlage durchgeführt wird.

7. Verfahren nach Anspruch 4, dadurch gekennzeichnet, daß die Oxidation durch Abflammen mit offener Flamme (Propangas bzw. Butangas) erfolgt.

8. Verfahren nach Anspruch 1, dadurch gekennzeichnet, daß die Oberfläche der noch warmen Kunststoffplatte mit einem Schmelzkleber versehen und im On-line-Verfahren mit der Verkleidung verbunden wird.

9. Kunststoffverbundplatte, hergestellt nach dem Verfahren einer der vorhergehenden Ansprüche, mit einer aus massivem Kunststoff bestehen Trägerplatte, auf deren eine Oberfläche mit einer Verkleidung anderen Materials geklebt ist, dadurch gekennzeichnet, daß die Trägerplatte aus Sekundärkunststoff (Recyclekunststoff) besteht und daß die Oberfläche der Trägerplatte eine Verkleidung aus Primärwerkstoffen aufweist.

10. Kunststoffverbundplatte nach Anspruch 9, dadurch gekennzeichnet, daß beide Oberflächen der Kunststoffplatte beschichtet sind und daß der Wärmeausdehnungskoeffizient der beiden Verkleidungen in etwa gleich ist.

11. Kunststoffverbundplatte nach Anspruch 9, dadurch gekennzeichnet, daß als Verkleidung auf einer Seite der Kunststoffplatte ein Kunststoffschaum (Polyurethanschaum) dient.

12. Kunststoffverbundplatte nach Anspruch 9, dadurch gekennzeichnet, daß als Kleber zwischen Kunststoffplatte und Verkleidung ein Zweikomponentenkleber dient.

13. Kunststoffverbundplatte nach einem der vorhergehenden Ansprüche, dadurch gekennzeichnet, daß zwei einseitig beschichtete Trägerplatten auf der unbeschichteten Seite über einen Kunststoffschaub (Polyurethanschaum) miteinander verbunden sind.

## Claims

1. Process for the production of laminated plastic sheets from a plastic sheet and coating of its surface, **characterized by the following process steps:**
- Production of a solid plastic sheet as substrate sheet by the hot calendering process, where the plastic is essentially secondary plastic (recycling plastic)
- Surface treatment of the plastic sheet for improvement of the laminating action and adhesion of an adhesive
- Automatic or manual application of an adhesive to the surface of the plastic sheet or of the coating
- Application of the coating in the form of a laminate of a film or sheet of plastic, metal, textile fabric and the like on the surface of the plastic sheet and
- Pressing the coating onto the plastic sheet.

2. Process in accordance with Claim 1, **characterized by the fact that** as surface treatment, at least the rolls acting last in the sheet production, possess a textured sleeve in order to impart a textured surface to the plastic sheet,

3. Process in accordance with Claim 1, **characterized by the fact that** the surface treatment takes place mechanically, (with material removal), as a result of which the surface of the plastic sheet is flattened as well as roughened.

4. Process in accordance with Claim 1 or 3, **characterized by the fact that** the surface of the plastic is oxidized by means of electronic, chemical or physical treatment.

5. Process in accordance with Claim 1, **characterized by the fact that**, as surface treatment, a glass surfacing mat is rolled into the surface of the plastic sheet while it is still hot.

6. Process in accordance with Claim 4, **characterized by the fact that** the oxidation is carried out in a corona system.

7. Process in accordance with Claim 4, **characterized by the fact that** the oxidation is effected by means of exposure to a naked flame (propane or butane gas).

8. Process in accordance with Claim 1, **characterized by the fact that** the surface of the plastic sheet while it is still hot is provided with a hot-melt adhesive and is bonded to the coating by the on-line process.

9. Laminated plastic sheet, produced by the process in accordance with one of the foregoing Claims, with a substrate sheet consisting of solid plastic, onto one of whose surfaces is bonded a coating of different material, **characterized by the fact that** the substrate sheet consists of secondary plastic (recycle plastic) and that the surface of the substrate sheet incorporates a coating of primary materials.

10. Laminated plastic sheet in accordance with Claim 9, **characterized by the fact that** both surfaces of the plastic sheet are coated and that the coefficient of thermal expansion of the two coatings is approximately the same.

11. Laminated plastic sheet in accordance with Claim 9, **characterized by the fact that**, as coating on one side of the plastic sheet, a cellular plastic (cellular polyurethane) is used.

12. Laminated plastic sheet in accordance with Claim 9, **characterized by the fact that**, as adhesive between plastic sheet and coating, a separate application adhesive is used.

13. Laminated plastic sheet in accordance with one of the foregoing Claims, **characterized by the fact that** two substrate sheets coated on one side are bonded to one another on the uncoated side by means of a cellular plastic (cellular polyurethane).

## Revendications

1. Procédé de fabrication de panneaux en plastique composites comprenant un panneau en plastique plus l'habillage de la surface de ce dernier, caractérisé en ce que le procédé comprend les étapes suivantes:
- Fabrication d'un panneau en plastique massif offiçant de panneau-support obtenu par laminage à chaud, le plastique étant essentiellement un plastique secondaire (plastique recyclé).
- Traitement de la surface du panneau pour améliorer l'effet unificateur et l'adhérence d'une colle;
- Enduction automatique ou manuelle d'une colle à la surface du panneau en plastique et de l'habillage,
- Pose de l'habillage, sous forme de feuille ou de panneau stratifié(e) en plastique, métal, textile ou assimilé sur la surface du panneau en plastique et
- Pressage de l'habillage sur le panneau en plastique.

2. Procédé selon revendication 1, caractérisé en ce qu'à titre de traitement superficiel au moins les derniers cylindres agissant sur les panneaux lors de la fabrication de ces derniers présentent une surface structurée permettant de conférer une surface également structurée au panneau en matière plastique.

3. Procédé selon revendication 1, caractérisé en ce que le traitement superficiel a lieu mécaniquement par enlèvement de matière (ponçage de la surface), la surface étant aplanie et rendue rugueuse par ce traitement.

4. Procédé selon revendication 1 ou 3, caractérisé en ce que la surface du panneau en plastique est oxydée par un traitement électronique, chimique ou physique.

5. Procédé selon revendication 1, caractérisé en ce que le traitement superficiel consiste à presser un mat de verre par laminage sur la surface encore chaude du panneau en plastique.

6. Procédé selon revendication 4, caractérisé en ce que l'oxydation a lieu dans une installation en couronne.

7. Procédé selon revendication 4, caractérisé en ce que l'oxydation est obtenue par flambage à la flamme nue (gaz propane ou butane).

8. Procédé selon revendication 1, caractérisé en que la surface encore chaude du panneau en plastique est revêtue d'une colle fusible puis, par un procédé en ligne, assemblée avec l'habillage.

9. Panneau en plastique composite, fabriqué selon le procédé énoncé dans l'une des revendications précédentes, comprenant un panneau-support en plastique massif, sur une surface duquel est collé un habillage d'une autre matière, caractérisé en ce que le panneau-support est fabriqué dans un plastique secondaire (matière plastique recyclée) et que la surface de ce panneau-support présente un habillage fait de matières plastiques primaires.

10. Panneau en plastique composite selon revendication 9, caractérisé en ce que les deux surfaces du panneau en plastique sont chacunes revêtues et que le coefficient de dilatation thermique de ces deux habillages est approximativement identique .

11. Panneau en plastique selon revendication 9, caractérisé en ce que que l'habillage d'un côté du panneau en plastique est constitué par une mousse synthétique (mousse de polyuréthane).

12. Panneau en plastique selon revendication 9, caractérisé en ce que la colle utilisée pour unir le panneau en plastique et l'habillage est une colle deux composants.

13. Panneau en plastique composite selon l'une des revendications précédentes, caractérisé en ce que deux panneaux-supports revêtus d'un seul côté sont unis, par leurs côtés non revêtus, par une mousse synthétique (mousse de polyuréthane).
